# NEW EUROPEAN PATENT SPECIFICATION

(11) **EP 0 484 295 B2**
(45) Date of publication and mention of the opposition decision: **08.08.2001**
(45) Mention of the grant of the patent: 07.02.1996
(21) Application number: 91830464.3
(22) Date of filing: 29.10.1991
(51) Int. Cl.: H01M 2/18

(54) **A separator envelope for lead-accumulator electrode plates and a method for its production**
Separatorumhüllung für Blei-Akkumulator Elektrodeplatten und Verfahren zu ihrer Herstellung
Enveloppe de séparateur pour accumulateur au plomb et son procédé de préparation

(30) Priority: 31.10.1990 IT 6785690
(43) Date of publication of application: 06.05.1992
(73) Proprietor: SOCIETA'INDUSTRIALE ACCUMULATORI S.p.A., 24058 Romano di Lombardia (Bergamo) (IT)
(72) Inventor: Lemorini, Luciano, c/o Industrie Magneti, I-20128 Milano (IT); Fossati, Giuseppe, I-24050 Mozzanica (Bergamo) (IT)
(74) Representative: Rambelli, Paolo

(56) References cited:
- EP-A- 0 250 846
- US-A- 3 892 620
- US-A- 3 989 579
- US-A- 4 215 186
- US-A- 4 663 253
- US-A- 4 680 242

## Description

The present invention relates in general to lead accumulators for starting motor vehicles and, in particular, to the separator envelopes used to surround the plates constituting the negative electrodes and thus separate the positive and negative electrode plates.

Such a separator envelope is generally formed by the folding of a sheet of microporous, absorbent material onto itself along a central fold line and the joining of its side edges.

The object of the present invention is to prevent, or at least reduce, the incidence of short-circuiting between the positive and negative plates which may make the accumulator unusable.

It has been found that such short-circuiting is frequently due to the perforation of the separator envelopes anc that such perforation occurs more frequently in the side edge regions of the separator which are in contact with the edges of the plate particularly when the plates have edges which are not chamfered or sides without rims.

In view of the aforesaid object, the present invention provides a lead accumulator having the features defined in claim 1 and a method for producing a separator envelope for a lead accumulator-plate according to claim 4.

In a first embodiment, each thickened edge portion is formed by a side portion of the sheet forming the separator which is folded onto itself for a width such that it covers the side edges of the respective plate.

In another embodiment, the edges of the separator envelope have lateral beads perpendicular to the central fold line and thicker than the sheet, the beads forming the thickened edge portions when the sheet is folded to form the envelope.

Further advantages and characteristics of the separator according to the invention will become clear from the detailed description which follows with reference to the appended drawings, in which:
Figure 1 is a partially-sectioned plan view of a first embodiment of the separator envelope, with an electrode plate inserted therein,
Figure 2 is a section taken on the line II-II of Figure 1,
Figure 3 is a detailed view taken on the arrow III of Figure 1, on an enlarged scale,
Figure 4 is a cross-section of a sheet for forming a variant of the separator envelope, and
Figure 5 is a detail of Figure 4, on an enlarged scale.

With reference to the drawings, a separator, indicated 1, has been folded to form an envelope in which an electrode plate 2 is inserted.

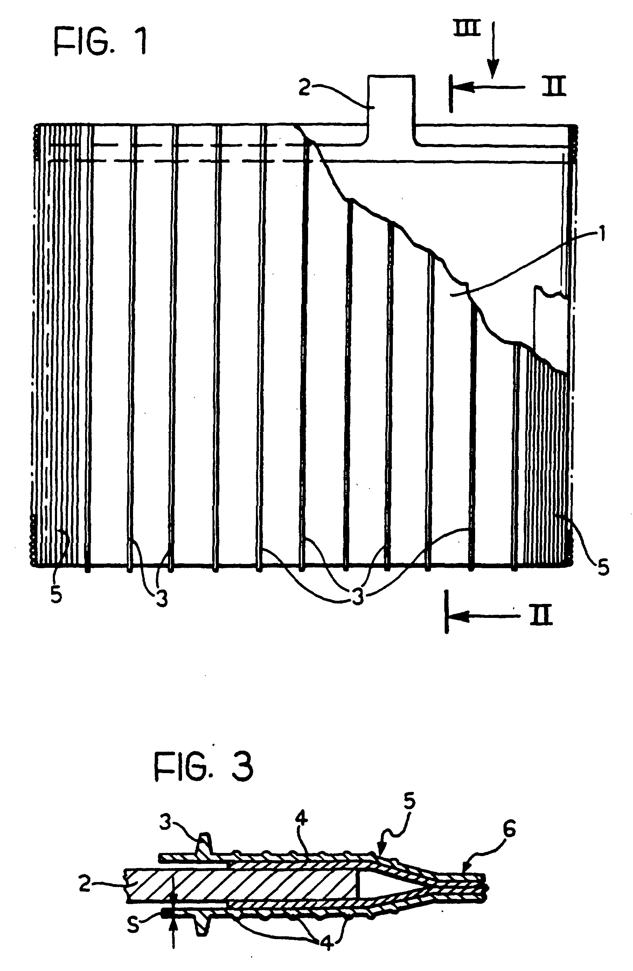

The embodiment of Figures 1-3 uses a conventional separator available commercially and made from a microporous sheet, for example, of polyethylene with a wall thickness which is almost uniform except for ribs 3 which act as spacers between the electrodes in the envelope configuration.

The sheet is folded onto itself along a central fold line which constitutes the bottom of the envelope. Each side portion 4 of the sheet is folded over inwardly or outwardly of the envelope along a fold line perpendicular to the central fold line and substantially parallel to the side edges of the sheet so that a folded-over region 5 with a thickness twice that s of the walls formed by the sheet is formed in each side edge region of the envelope.

These thicker edge portions substantially reduce the risk of the perforation of the edge regions of the separator which are in contact with the edges of the plate, thus reducing the risk of short-circuiting. The side edges of the envelope are then joined together at 6.

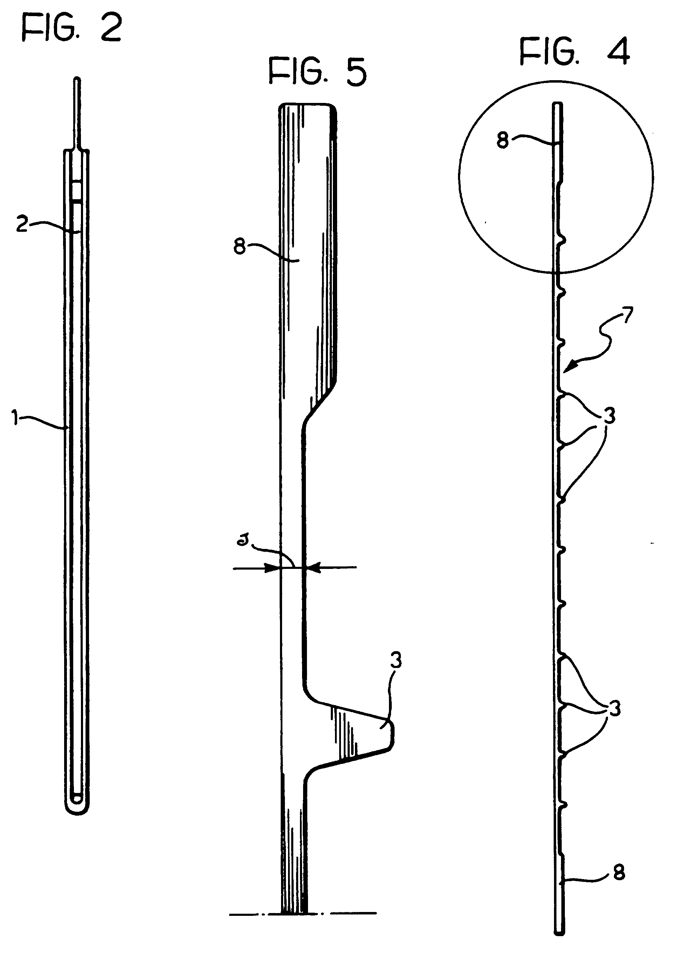

Figure 4 shows a separator 7 modified according to the principle of the invention in its extended configuration before it has been folded. Adjacent its edges, this separator has thickened edge portions or beads 8 which are about twice as thick as the walls of the separator. The widths of the beads 8 are such that, when the sheet is folded to form an envelope, they cover at least the side edges of the plate inserted in the envelope.

In this embodiment, the envelope is also formed by the folding of the separator 7 onto itself along a central line, the beads 8 being superposed and joined together at their edges.

Naturally, the principle of the invention remaining the same, the forms of embodiment and details of construction may be varied widely with respect to those described and illustrated by way of non-limiting example. Lead accumulators, particularly for starting motor-vehicle engines, including separator envelopes of the type specified above are intended to fall within the scope of the invention.

## Claims

1. A lead accumulator for starting motor vehicles comprising a plurality of electrode plates (2) inserted in a separator envelope formed from a sheet of absorbent, microporous material folded onto itself along a central fold line and having, adjacent its side edges, thickened edge portions (5, 8) which are joined together and extend from the bottom of the envelope to its mouth, said thickened edge portions being integral with the envelope and having a thickness greater than that (s) of the walls constituting the faces of the envelope, characterised in that upon folding the sheet to form the envelope each thickened edge portion (5, 8) has a width such as to cover a strip-like end section of the side surface of the respective plate inserted in the envelope.

2. A lead accumulator according to claim 1 comprising a separator in which the thickened edge portions (5) are about twice as thick as the walls formed by the sheet.

3. A lead accumulator according to claims 1 or 2, wherein said thickened edge portion is formed by a side portion (4) of the sheet which is folded onto itself.

4. A method of producing a separator envelope for lead-accumulator plates according to claims 1 to 3 by the folding of a sheet of absorbent material onto itself along a central line of the sheet and the joining of its side edges, characterised in that, before the joining, it includes the step of folding each side portion of the sheet onto itself along a fold line perpendicular to the central fold line of the sheet so as to form along the side edges of the envelope folded-over regions whose widths are such as to cover at least a strip-like section of the side surface of the plate when it is inserted in the separator.

## Patentansprüche

1. Bleiakkumulator zum Anlassen von Kraftfahrzeugen mit mehreren Elektrodenplatten (2), die in eine Trennhülle eingesetzt sind, die aus einer Folie aus einem saugfähigen, mikroporösen Material hergestellt ist, die längs einer mittleren Faltlinie auf sich selbst gefaltet ist und die neben ihren Seitenkanten verdickte Kantenbereiche (5, 8) aufweist, die miteinander verbunden sind und vom Boden der Hülle zu deren Öffnung verlaufen, wobei die verdickten Kantenbereiche (5, 8) mit der Hülle einstückig sind und eine Dicke besitzen, die größer als die Dicke (s) jener Wände ist, die die Flächen der Hülle bilden, dadurch gekennzeichnet, daß beim Falten der Folie zum Ausbilden der Hülle jeder verdickte Kantenbereich (5, 8) eine Breite aufweist, die so groß ist, um einen streifenartigen Endbereich der Seitenfläche der jeweiligen, in die Hülle eingesetzten Platte zu bedecken.

2. Bleiakkumulator gemäß Anspruch 1, wobei er ein Trennelement enthält, bei dem die verdickten Kantenbereiche (5) etwa doppelt so dick wie die Wände sind, die von der Folie gebildet werden.

3. Bleiakkumulator gemäß Anspruch 1 oder 2, wobei der verdickte Kantenbereich von einem Seitenteil (4) der Folie gebildet wird, der auf sich selbst gefaltet ist.

4. Verfahren zur Herstellung einer Trennhülle für Bleiakkumulator-Platten gemäß Anspruch 1 bis 3, indem eine Folie aus einem saugfähigen Material längs einer Mittellinie der Folie auf sich selbst gefaltet und die Seitenkanten verbunden werden, dadurch gekennzeichnet, daß das Verfahren vor dem Verbinden einen Schritt aufweist, um jeden Seitenteil der Folie längs einer Faltlinie senkrecht zur mittleren Faltlinie der Folie auf sich selbst zu falten, um längs der Seitenkanten der Hülle überfaltete Bereiche auszubilden, die so breit sind, daß sie zumindest einen streifenartigen Bereich der Seitenfläche der Platte bedecken, wenn diese in das Trennelement eingesetzt ist.

## Revendications

1. Accumulateur au plomb servant au démarrage des véhicules à moteur comprenant une pluralité de plaques d'électrodes (2) introduites dans une enveloppe de séparation formée à partir d'une feuille de matériau absorbant micro-poreux pliée sur elle-même le long d'une ligne centrale de pliage et comportant, à côté de ses bords latéraux, des parties de bords épaissies (5,8) reliées les unes aux autres, allant du bas de l'enveloppe à son embouchure, lesdites parties de bord épaissies faisant partie intégrante de l'enveloppe, et dont l'épaisseur est supérieure à celle(s) des parois constituant les faces de l'enveloppe, caractérisé en ce que aprés le pliage de la feuille pour former l'enveloppe, chaque partie de bord épaissie (5,8) a une largeur telle qu'elle recouvre une partie d'extrémité en forme de bande de la surface latérale de la plaque correspondante introduite dans l'enveloppe.

2. Accumulateur au plomb selon la revendication 1, comprenant un séparateur dans lequel les parties de bords épaissies (5) sont sensiblement deux fois plus épaisses que les parois constituées par la feuille.

3. Accumulateur au plomb selon la revendication 1 ou 2, dans lequel ladite partie de bord épaissie est constituée par une partie latérale (4) de la feuille qui est pliée sur elle-même.

4. Procédé de production d'une enveloppe de séparation pour plaques d'accumulateur au plomb selon les revendications 1 à 3 en pliant une feuille de matériau absorbant sur elle-même le long d'une ligne centrale de la feuille et en assemblant ses bords latéraux, caractérisé en ce que, avant l'assemblage, le procédé comprend l'opération qui consiste à plier chaque partie latérale de la feuille, sur elle-même le long d'une ligne de pliage perpendiculaire à la ligne centrale de pliage de la feuille, de façon à constituer le long des bords latéraux des régions de repli de l'enveloppe, lesquels ont des largeurs telles qu'elles recouvrent au moins une partie en forme de bande de la surface latérale de la plaque lorsque celle-ci est introduite dans le séparateur.
